# EUROPEAN PATENT APPLICATION

(11) **EP 4 125 306 A1**
(43) Date of publication of application: **01.02.2023**
(21) Application number: 21188856.5
(22) Date of filing: 30.07.2021
(51) Int. Cl.: H05B 47/155, G01S 7/481, G01S 17/894, H05B 47/10

(54) **ILLUMINATION DEVICE FOR AN OPTICAL SENSOR, OPTICAL SENSOR AND METHOD FOR CONTROLLING AN ILLUMINATION DEVICE**

(71) Applicant: Infineon Technologies AG, 85579 Neubiberg (DE)
(72) Inventor: THURNER, Thomas, 8044 Graz (AT); SCHOENLIEB, Armin Josef, 8054 Seiersberg-Pirka (AT)
(74) Representative: 2SPL Patentanwälte PartG mbB

(57) **Abstract**

An illumination device for an optical sensor is provided. The illumination device includes a plurality of light sources and a control circuit. The control circuit is configured to control the plurality of light sources to entirely illuminate a field of illumination in a first operation mode. The control circuit is further configured to control the plurality of light sources to illuminate at least one subfield of the field of illumination in a second operation mode.

## Description

### Field

The present disclosure relates to illumination. Examples relate to an illumination device for an optical sensor, an optical sensor, and a method for controlling an illumination device.

### Background

Imaging systems such as Time-of-Flight (ToF) imaging systems may support different illumination modes for various use cases. Conventionally, separate illumination devices are used for the different illumination modes. This may increase system complexity and costs.

Hence, there may be a demand for improved illumination.

### Summary

The demand may be satisfied by the subject matter of the appended claims.

An example relates to an illumination device for an optical sensor, comprising a plurality of light sources and a control circuit. The control circuit is configured to control the plurality of light sources to entirely illuminate a field of illumination in a first operation mode and control the plurality of light sources to illuminate at least one subfield of the field of illumination in a second operation mode.

Another example relates to an optical sensor, comprising an illumination device as described herein and a photo-sensitive circuit. The photo-sensitive circuit is configured to generate measurement data based on reflected light from the field of illumination.

Another example relates to a method for controlling an illumination device, comprising controlling a plurality of light sources of the illumination device to entirely illuminate a field of illumination in a first operation mode. The method further comprises controlling the plurality of light sources to illuminate at least one subfield of the field of illumination in a second operation mode.

### Brief description of the Figures

Some examples of apparatuses and/or methods will be described in the following by way of example only, and with reference to the accompanying figures, in which
Figs. 1a and 1b illustrate an example of an illumination device for an optical sensor;
Fig. 2 illustrates an exemplary array of light sources;
Figs. 3a-c illustrate exemplary optical devices;
Fig. 4 illustrates an example of an optical sensor; and
Fig. 5 illustrates a flowchart of an example of a method for controlling an illumination device.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

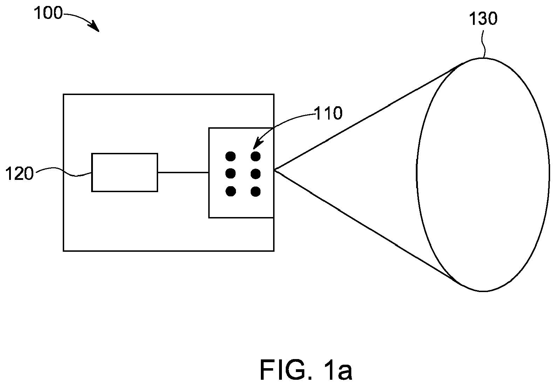

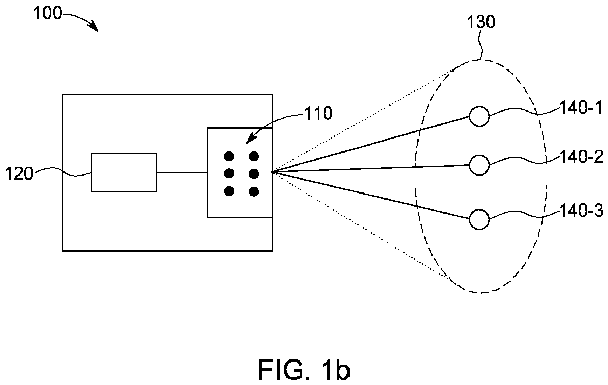

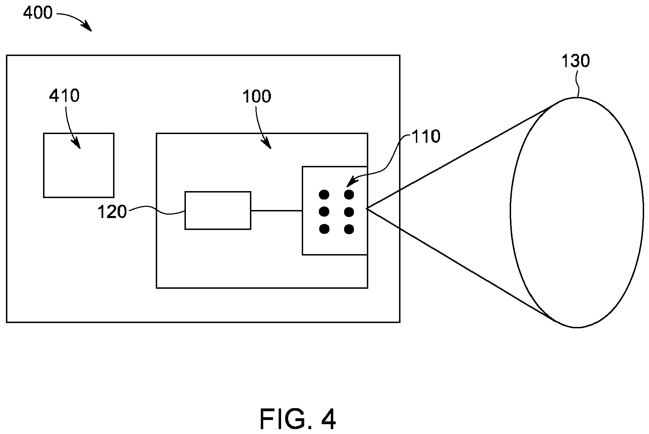

**Fig. 1a** and **Fig. 1b** illustrate an example of an illumination device 100 for an optical sensor in a first operation mode **(****Fig. 1a**) and a second operation mode **(Fig. lb).** An example of an optical sensor will be described below with reference to **Fig. 4****.**

The illumination device 100 comprises a plurality of light sources 110. By way of illustration, the light sources 110 are indicated by six dots in **Fig. 1a** and **Fig. 1b****.** The light sources 110 are arranged regularly in an array of two columns and three rows. In general, the plurality of light sources 110 may be any number N ≥ 2 of light sources 110. The light sources 110 may be arranged regularly in any suitable pattern. Alternatively, the light sources 110 may be arranged irregularly. The light sources 110 may comprise a Light-Emitting Diode (LED) and/or laser diode, such as a vertical cavity surface emitting laser (VCSEL). The light sources 110 may be fired based on one or more illumination (control) signals. The light sources 110 may be configured to emit light towards a scene. In general, the light emitted by the light sources 110 may be of any wavelength. Depending on an application of the illumination device 100, the light sources 110 may be configured to emit light of a specific wavelength, e.g., infrared light in case of ToF imaging.

The illumination device 100 further comprises a control circuit 120 configured to control the plurality of light sources 110. The control circuit 120 may be a single dedicated processor, a single shared processor, or a plurality of individual processors, some of which or all of which may be shared, a digital signal processor (DSP) hardware, an application specific integrated circuit (ASIC) or a field programmable gate array (FPGA). The control circuit 120 may optionally be coupled to, e.g., read only memory (ROM) for storing software, random access memory (RAM) and/or non-volatile memory. The control circuit 120 is coupled to the light sources 110 via one or more electrical connections. For controlling the plurality of light sources 110, the control circuit 120 may, e.g., generate the one or more illumination signals and transmit the one or more illumination signals to the plurality of light sources 110 via the one or more electrical connections. The control circuit 120 may be configured to separately control individual light sources of the plurality of light sources 110 and/or jointly control subsets of the plurality of light sources 110.

Referring to **Fig. 1a****,** control circuit 120 is configured to control the plurality of light sources 110 to entirely illuminate a field of illumination 130 in the first operation mode. In the first operation mode, at least one of the light sources 110 is controlled by the control circuit 120 to emit light towards the scene, resulting in the field of illumination 130. The entire field of illumination 130 may be illuminated simultaneously. The field of illumination 130 may correspond to or be part of a field of view of the optical sensor.

The field of illumination 130 is an extent of illumination caused by light emitted towards the scene by the light sources 110 in the first operation mode. By way of illustration, the field of illumination 130 is indicated by a conical shape in **Fig. 1a****.** The field of illumination 130 may correspond to a three-dimensional space limited by the scene and a solid angle through which the illumination device 100 may emit light towards the scene in the first operation mode. In other examples, the field of illumination 130 may be of ellipsoid, cuboid, or any other regular or irregular shape suitable to illuminate the scene.

Referring to **Fig. 1b****,** the control circuit 120 is further configured to control the plurality of light sources 110 to illuminate at least one subfield of the field of illumination 130 in the second operation mode. Each one of the at least one subfield may illuminate a respective subpart of the scene. The at least one subfield may correspond to a three-dimensional space within the field of illumination 130. Each one of the at least one subfield may correspond to a space limited by the respective subpart of the scene and a respective solid angle through which the illumination device 100 may emit light towards the respective subpart of the scene in the second operation mode. In the example of **Fig. 1b****,** three subfields 140-1, 140-2, 140-3 are illustrated. In general, any number M ≥ 1 of subfields may be illustrated in the second operation mode. In **Fig. 1b****,** the subfields 140-1, 140-2, 140-3 are indicated by circular shapes on a cross section of the field of illumination 130. The circular shapes may be thought of two-dimensional projections of the (three-dimensional) subfields 140-1, 140-2, 140-3 on the cross-section. However, the present disclosure is not limited thereto. In general, the at least one subfield of the field of illumination 130 may be of any shape, e.g., resulting in projections on the cross-section of the field of illumination 130 with square, triangle, hexagon, or other regular or irregular shapes. In case that plural subfields are illuminated in the second operation mode, the subfields may be arranged in any regular or irregular geometric pattern. In the second operation mode, the individual subfields may be illuminated simultaneously or at least partly at different points of time. One or more of the subfields may at least in part be located outside the field of illumination 130. The control circuit 120 may be further configured to control the plurality of light sources 110 to additionally illuminate a space outside of the field of illumination 130 in the second operation mode.

The control circuit 120 is further configured to control the light sources 110 to not entirely illuminate the field of illumination 130 in the second operation mode. In other words, the one or more subfields such as the subfields 140-1, 140-2, 140-3 illustrated in **Fig. 1b** do not cover the entire field of illumination 130. Part of the field of illumination 130 is not illuminated in the second operation mode. The control circuit 120 may be configured to selectively address the first operation mode or the second operation mode according to operation requirements.

The first operation mode may be understood as a flood illumination mode and enable homogenous illumination of a major part of the scene, e.g., for high-resolution imaging. The second operation mode may be understood as a dot illumination mode and allow to focus light, e.g., as dedicated light dots, to selected areas of the scene. Dot illumination may be used, e.g., for low power, low reflectivity, or long-distance imaging.

The two operation modes of the illumination device 100 may allow to illuminate the scene in different ways (e.g., according to operational requirements of the optical sensor) with only a single illumination device. Compared to conventional devices, the illumination device 100 supporting multiple operation modes for illumination may be advantageous as system complexity, costs and calibration efforts may be reduced. The illumination device 100 may be used for various optical sensors/applications such as, e.g., Lidar (Light detection and ranging) sensors, direct/indirect ToF imaging sensors, three-dimensional imaging sensors, or structured light sensors.

The illumination device 100 may optionally support further operation modes for illuminating, e.g., different subfields of the field of illumination 130 or only areas of the scene outside the field of illumination 130.

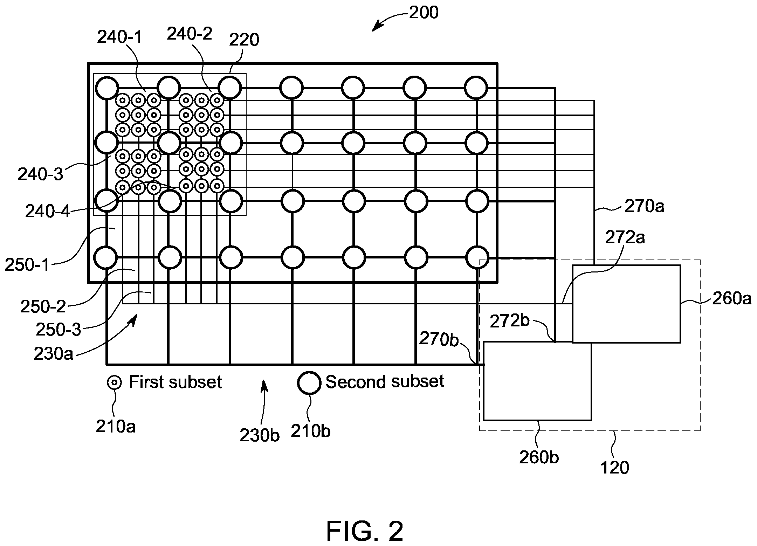

**Fig. 2** illustrates an exemplary array 200 of light sources 110. The array 200 may be a systematic arrangement of the light sources 110 in rows and columns. The illumination device 100 may, e.g., integrate the array 200 of light sources on a semiconductor die.

The plurality of light sources 110 are divided into a first subset 210a and a second subset 210b. Light sources of the first subset 210a are indicated by small circles (relative to light sources of the second subset 210b) in **Fig. 2****.** Light sources of the second subset 210b are indicated by big circles (relative to light sources of the first subset 210a) in **Fig. 2****.** For simplification, only a part of the light sources of the first subset 210a are shown in **Fig. 2****.** In particular, light sources of the first subset 210a are only shown in the upper left area 220 of the array 200. It is to be noted that light sources of the first subset 210a may be arranged in the other parts of the array 200 accordingly. The light sources of the first subset 210a and the light sources of the second subset 210b may be of a same type, e.g., VCSEL, and have a same radiant power. Alternatively, the light sources of the first subset 210a and the light sources of the second subset 210b may differ in type and/or radiant power. This may be advantageous as the type and radiant power of the light source may be selected according to specific requirements of the respective operation mode.

The light sources of the first subset 210a may differ from the light sources of the second subset 210b, i.e., the first subset 210a and the second subset 210b may comprise respective ones of the plurality of light sources 110. In some examples, each of the plurality of the light sources 110 may be part of (included in) either the first subset 210a or the second subset 210b. None of the plurality of light sources 110 may be part of both, the first subset 210a and the second subset 210b.

In **Fig. 2****,** the light sources of the first subset 210a are arranged in a first array 230a and the light sources of the second subset 210b are arranged in a second array 230b. The first array 230a and the second array 230b are spatially interleaved resulting in the array 200. The first array 230a comprises repetitive sequences of 3x3 subarrays of light sources of the first subset 210a, such as 3x3 subarray 240-1, 240-2, 240-3, 240-4, placed between the light sources of the second subset 210b. Each 3x3 subarray 240-1, 240-2, 240-3, 240-4 comprises nine light sources arranged in three rows and three columns. The light sources of the 3x3 subarrays 240-1, 240-2, 240-3, 240-4 are spaced with equivalent distances to each other. The 3x3 subarrays 240-1, 240-2, 240-3, 240-4 are delimited by four light sources of the second subset 210b, respectively. The arrangement of light sources shown in **Fig. 2** is to be understood as an illustrative example of the present disclosure. In general, the light sources of the first subset 210a may be distributed regularly or irregularly over the first array 230a. The light sources of the second subset 210b may be distributed regularly or irregularly over the second array 230b. A concentration of light sources of the first subset 210a may be (e.g., 5 %, 10 %, 20 % or 50 %) higher in a center area of the first array 230a than in a boundary area of the first array 230a. Likewise, a concentration of light sources of the second subset 210b may be (e.g. 5 %, 10 %, 20 % or 50 %) higher in a center area of the second array 230b than in a boundary area of the second array 230b. In other words, the number of light sources of the first subset 210a and/or the second subset 210b per unit area on the respective first array 230a and/or second array 230b may be higher in the center area of the respective first array 230a and/or second array 230b than in a boundary area of the respective first array 230a and/or second array 230b.

In general, the light sources of the first subset 210a and the light sources of the second subset 210b may be arranged in a regular or irregular sequence of subarrays. The subarrays may comprise any number of light sources arranged into any suitable number of rows and columns. The individual subarrays may also differ one from another with respect to the number of rows and/or columns and/or the number of light sources. The light sources of the first subset 210a may be arranged differently than shown in **Fig. 2** relative to the light sources of the second subset 210b. For instance, some of the light sources of the second subset 210b may not adjoin light sources of the first subset 210a. Moreover, one or more light sources of the plurality of light sources 110 may not be assigned to the first subset 210a or the second subset 210b, e.g., in case that the illumination device 100 supports further operation modes.

Referring back to **Fig. 2****,** the first array 230a comprises a first mesh (plurality) of conductive lines, such as conductive lines 250-1, 250-2, 250-3, interconnecting the light sources of the first subset 210a along columns and rows of the first array 230a. The first mesh of conductive lines electrically connects the light sources of the first subset 210a with a first driver circuit 260a via two nodes 270a, 272a. The first driver circuit 260a is configured to selectively switch on/off the first subset 210a of light sources to illuminate a field of illumination in the first operation mode.

Similarly, the second array 230b comprises a second mesh (plurality) of conductive lines interconnecting the light sources of the second subset 210b along columns and rows of the second array 230b. The second mesh of conductive lines electrically connects the light sources of the second subset 210b with a second driver circuit 260b via two nodes 270b, 272b. The second driver circuit 260b is configured to selectively switch on/off the second subset 210b of light sources to illuminate at least one subfield of the field of illumination in the second operation mode. The first mesh of conductive lines may be electrically isolated from the second mesh of conductive lines.

The first driver circuit 260a and the second driver circuit 260b are elements of the control circuit 120. The first driver circuit 260a and the second driver circuit 260b are placed outside the array 200 in the example of **Fig. 2****.** In other examples, the first driver circuit 260a and the second driver circuit 260b may be arranged within (integrated into) the array 200. For example, the first driver circuit 260a may be integrated into the first array 230a, and/or the second driver circuit 260b may be integrated into the second array 230b. In other examples, the first driver circuit 260a and the second driver circuit 260b, i.e., the control circuit 120, may both be integrated into one of the first array 230a and the second array 230b. According to examples, the control circuit 120 may be monolithic, i.e., the functionalities of the first driver circuit 260a and the second driver circuit 260b may be integrated in a single circuit to, e.g., reduce system complexity and costs. In case the control circuit 120 is not integrated into the array 200, the control circuit 120 may be arranged in a common package with the array 200. Both options may allow small dimensions of the illumination device 100 and short lengths of conductive lines, such as the conductive lines 250-1, 250-2, 250-3. The control circuit 120 may comprise, e.g., one or more Field-Effect Transistor (FET) semiconductor switches configured to address the plurality of light sources 110 via an interface supporting suitable signal sequencing methods such as Low-Voltage Differential Signaling (LVDS).

As an alternative to the spatially interleaved first and second arrays 230a, 230b shown in **Fig. 2****,** the plurality of light sources 110 may be arranged in a shared array. The plurality of light sources 110 may be divided into a first subset of light sources and a second subset of light sources, e.g., similarly to the first subset 210a and the second subset 210b. The control circuit 120 may be configured to switch on the light sources of the first subset in the first operation mode and to switch on the light sources of the second subset in the second operation mode. The light sources of the first subset 210a and/or the light sources of the second subset 210b may be distributed regularly or irregularly over the shared array. A concentration of the light sources of the first subset and/or the second subset in a center area of the shared array may be higher than in a boundary area of the shared array. For instance, the concentration of the light sources of the second subset 210b, i.e., the number of light sources of the second subset 210b per unit area on the array, may be, e.g., 5 %, 10 %, 20 % or 50 %, higher in the center area of the array than in a boundary area of the array which may be advantageous for the dot illumination mode. As the flood illumination mode, for instance, may require a higher radiant power than dot illumination, it may be advantageous to provide a higher number of light sources in the first subset 210a (dedicated to flood illumination) than in the second subset 210b.

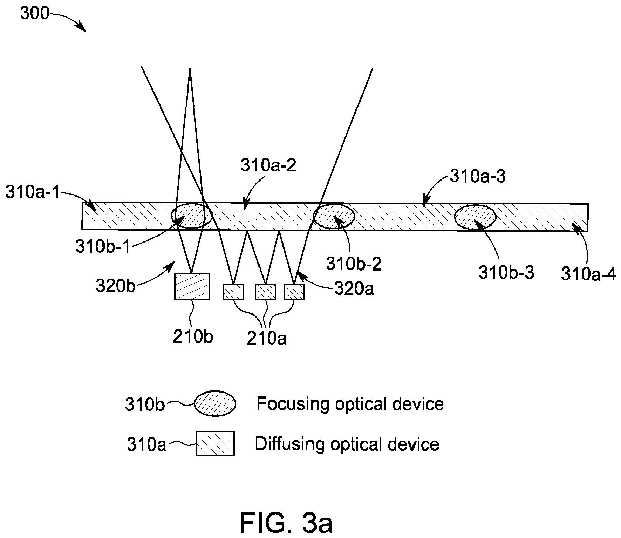

The illumination device 100 may additionally comprise an optical device, such as the optical device 300 shown in **Fig. 3a****.** The optical device 300 is placed in parallel with the plurality of light sources and is located between the optical device 300 and the field of illumination 130. This is indicated in **Fig. 3a** with reference to the array 200 as illustrated in **Fig. 2****.** As a reference, three light sources of the first subset 210a and a single light source of the second subset 210b are illustrated in **Fig. 3a****.** However, it is to be noted that the optical devices as described herein may be used with any other array of light sources as well. The optical device 300 is divided into several sections such as sections 310a-1, 310a-2, 310a-3, 310a-4, 310b-1, 310b-2, 310b-3. The sections 310a-1, 310a-2, 310a-3, and 310a-4 from a diffusing optical device 310a. The diffusing optical device 310a is configured to diffuse light emitted by the light sources of the first subset 210a in the first operation mode. This may be advantageous for a homogenous illumination of a scene during flood illumination. The sections 310b-1, 310b-2, 310b-3 form a focusing optical device 310b. The focusing optical device 310b is configured to focus light emitted by the light sources of the second subset 210b in the second operation mode. This may be useful to provide high-intensity light nodes for dot illumination.

The optical device 300 is placed on top of the light sources of the first subset 210a and the second subset 210b. The optical device 300 faces a light-emitting side of the light sources of the first subset 210a and the second subset 210b. The optical device 300 may be, e.g., placed parallel to any array of light sources (e.g., the array 200). The optical device 300 may be understood as a Diffractive Optical Element (DOE). For example, the optical device 300 may be formed as a thin plate of glass and/or polymer with micro- or nanostructures on a surface of the plate. The DOE may be capable of manipulating an incident light's phase, amplitude, or radiation angle based on different refractive indexes along the structured surface or based on different path lengths of the light running through the DOE. The micro- or nanostructures may correspond to a desired field of illumination and a desired subfield of the field of illumination. The diffusing optical device 310a and the focusing optical device 310b may be etched, cut, or otherwise shaped into a surface of the optical device 300, resulting in micro-or nanostructures on the surface with focusing and diffusing sections. Alternatively, the focusing optical device 310b may comprise optical convex lenses integrated into the optical device 300. The diffusing optical device 310a may also comprise two or more different kinds of diffusing optical elements, e.g., two or more DOEs of different materials. The focusing optical device 310b may also comprise two or more different kinds of focusing optical elements, e.g., one or more optical convex lens and/or one or more DOE.

The sections 310a-1, 310a-2, 310a-3, and 310a-4 are arranged on the optical device 300 corresponding to a location of the light sources of the first subset 210a. Likewise, the sections 310b-1, 310b-2, 310b-3 are arranged on the optical device 300 corresponding to a location of the light sources of the second subset 210b. In other words, the diffusing optical device 310a may be placed on top of the light sources of the first subset 210a and the focusing optical device 310b may be placed on top of the light sources of the second subset 210b. As a consequence, a major part of light 320a emitted by the first subset 210a of light sources may pass through the diffusing optical device 310a. Likewise, a major part of light 320b emitted by the second subset 210b of light sources may pass through the focusing optical devices 310b.

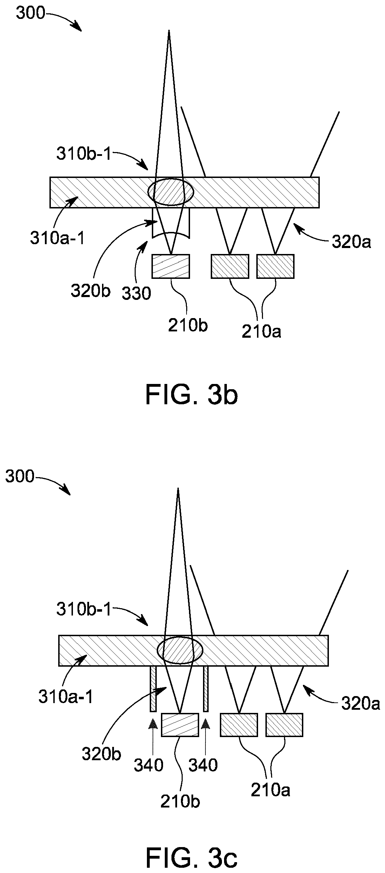

In other examples, the diffusing optical device 310a and/or the focusing optical device 310b may protrude from the optical device 300 towards the light sources of the first subset 210a or the second subset 210b, respectively. This may be advantageous as some parts of the light 320a, 320b may be reflected when impacting on the optical device 300. This may cause an undesirable cross-coupling. In other words, the light 320a of the first subset 210a may be reflected at the diffusing optical device 310a and diffracted towards the focusing optical device 310b and vice versa. **Fig. 3b** and **Fig. 3c** illustrate two examples of the focusing optical device 310b protruding from the optical device 300 towards the light sources of the second subset 210b.

In the example of **Fig. 3b****,** the focusing optical device 310b comprises an optical waveguide 330 protruding from the focusing optical device 310b towards an associated light source of the second subset 210b. The optical waveguide 330 may be, e.g., an optical fiber or a strip of polymer or glass configured to lead the light 320b towards the focusing optical device 310b. Inner surfaces of the optical waveguide 330 may be mirroring or have a suitable refraction index to avoid that part of the light 320b escapes the optical waveguide 330.

In the example of **Fig. 3c****,** the focusing optical device 310b comprises light barriers 340 protruding from the focusing optical device 310b towards the associated light source of the second subset 210b. The light barriers 340 may be, e.g., a layer of at least one of light-absorbing material and light-reflecting material placed on a surface of the optical device 300. The light barriers 340 may be arranged along edges of the focusing optical device 310b to prevent parts of the light 320b from leaving a defined space between the edges of the light barriers 340. The light barriers 340 may have an opaque surface to absorb undesirable reflections. Alternatively, the light barriers 340 may reflect parts of the light 320b back to the defined space to increase an energy efficiency of the illumination device 100.

An example of an optical sensor 400 is shown in **Fig. 4****.** The optical sensor 400 comprises the illumination device 100 and a photo-sensitive circuit 410. The illumination device 100 emits light to the field of illumination 130 or one or more subfield thereof as described above. Objects in the field of illumination 130 may reflect the emitted light. The reflected light is captured by the photo-sensitive circuit 410. The photo-sensitive circuit 410 may comprise, e.g., an active pixel sensor, a CMOS sensor or another photodetector.

For example, the photo-sensitive circuit 410 may be a ToF sensor for direct or indirect ToF sensing. The photo-sensitive circuit 410 comprises one or more photo-sensitive elements or pixels (e.g., a Photonic Mixer Device, PMD, or a Charge-Coupled Device, CCD). Accordingly, the photo-sensitive circuit 410 may be configured to generate measurement data based on the reflected light (e.g., for distance measurements). The measurement data may be inferred from a correlation of the reflected light with a reference signal for indirect ToF sensing. In case of direct ToF sensing, the photo-sensitive circuit 410 may be configured to measure a time difference between an emission time of a light pulse emitted by the illumination device 100 for illuminating the field of illumination 130 or one or more subfield thereof, and a reception time of the reflected light at the photo-sensitive circuit 410.

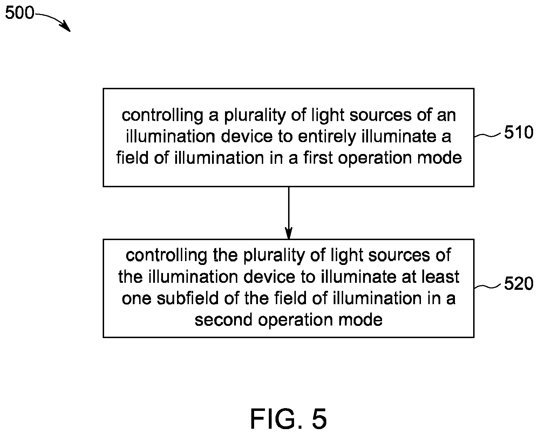

**Fig. 5** illustrates a flowchart of a method 500 for controlling an illumination device such as the illumination device 100. The method 500 comprises controlling 510 a plurality of light sources of the illumination device to entirely illuminate a field of illumination in a first operation mode. The method 500 further comprises controlling 520 the plurality of light sources of the illumination device to illuminate at least one subfield of the field of illumination in a second operation mode. For example, the method 400 may be performed by the control circuit 120 of the illumination device 100.

The method 500 may allow a combination of the first operation mode, e.g., flood illumination, and the second operation mode, e.g., dot illumination in one shared package. This may reduce system complexity and costs in applications where both operation modes are necessary and senseful.

More details and aspects of the method 500 are explained in connection with the proposed technique or one or more examples described above. The method 500 may comprise one or more additional optional features corresponding to one or more aspects of the proposed technique or one or more examples described above.

The examples as described herein may be summarized as follows:
An example relates to an illumination device for an optical sensor, comprising a plurality of light sources and a control circuit. The control circuit is configured to control the plurality of light sources to entirely illuminate a field of illumination in a first operation mode and control the plurality of light sources to illuminate at least one subfield of the field of illumination in a second operation mode.

In some examples, the control circuit is further configured to control the plurality of light sources to not entirely illuminate the field of illumination in the second operation mode.

In some examples, the control circuit is further configured to control the plurality of light sources to illuminate a space outside of the field of illumination in the second operation mode.

According to some examples, the illumination device further comprises an optical device. The optical device may comprise one or more focusing optical device and one or more diffusing optical device. The one or more diffusing optical device may be configured to diffuse light emitted by at least one of the plurality of light sources in the first operation mode. The one or more focusing optical device may be configured to focus light emitted by at least one of the plurality of light sources in the second operation mode.

In some examples, the control circuit is further configured to selectively switch on and off a first subset of the plurality of light sources in the first operation mode to illuminate the field of illumination and to selectively switch on and off a second subset of the plurality of light sources in the second operation mode to illuminate said at least one subfield.

According to some examples, the control circuit comprises a first driver circuit connected to the first subset of the plurality of light sources and configured to switch on the first subset in the first operation mode. The control circuit may further comprise a second driver circuit connected to the second subset of the plurality of light sources and configured to switch on the second subset in the second operation mode.

In some examples, at least one of the one or more focusing optical device faces at least one of the light sources of the second subset, and at least one of the one or more diffusing optical device faces at least one of the light sources of the first subset.
According to some examples, the at least one of the one or more focusing optical device protrudes from the optical device towards the at least one of the light sources of the second subset.

In some examples, the at least one of the one or more diffusing optical device protrudes from the optical device towards the at least one of the light sources of the first subset.

According to some examples, the plurality of light sources are arranged in an array.

In some examples, the light sources of the first subset and/or the light sources of the second subset are distributed irregularly over the array.

According to some examples, a concentration of the light sources of the first subset in a center area of the array is higher than in a boundary area of the array.

In some examples, the control circuit is integrated into the array.

According to some examples, the control circuit and the plurality of light sources are arranged in a common package.

In some examples, the light sources of the first subset are arranged in a first array and the light sources of the second subset are arranged in a second array. The first array and the second array may be spatially interleaved.

According to some examples, the light sources of the first subset are distributed irregularly over the first array and/or the light sources of the second subset are distributed irregularly over the second array.

In some examples, a concentration of the light sources of the first subset in a center area of the first array is higher than in a boundary area of the first array.

According to some examples, the control circuit is integrated into the first and/or second array.

In some examples, the optical device is placed in parallel with the plurality of light sources.

According to some examples, at least one of the plurality of light sources comprises a laser diode.

In some examples, at least one of the plurality of light sources comprises a vertical cavity surface emitting laser.

Another example relates to an optical sensor. The optical sensor comprises the illumination device and a photo-sensitive circuit configured to generate measurement data based on reflected light from the field of illumination.

In some examples, the photo-sensitive circuit is configured to generate the measurement data based on a correlation of the reflected light with a reference signal.

According to some examples, the photo-sensitive circuit is configured to generate the measurement data based on a time difference between an emission time of a light pulse emitted by the illumination device to the field of illumination and a reception time of the reflected light.

Another example relates to a method for controlling an illumination device. The method comprises controlling a plurality of light sources of the illumination device to entirely illuminate a field of illumination in a first operation mode and controlling the plurality of light sources to illuminate at least one subfield of the field of illumination in a second operation mode.

In some examples, controlling the plurality of light sources to illuminate the at least one subfield of the field of illumination in a second operation mode comprises controlling the plurality of light sources to not entirely illuminate the field of illumination.

Another example relates to a non-transitory machine-readable medium having stored thereon a program having a program code for performing the method for controlling an illumination device as described herein, when the program is executed on a processor or a programmable hardware.

Another example relates to a program having a program code for performing the method for controlling an illumination device as described herein, when the program is executed on a processor or a programmable hardware.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes or -operations.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An illumination device (100) for an optical sensor (400), comprising:
a plurality of light sources (110); and
a control circuit (120) configured to:
control the plurality of light sources (110) to entirely illuminate a field of illumination (130) in a first operation mode; and
control the plurality of light sources (110) to illuminate at least one subfield (140-1, 140-2, 140-3) of the field of illumination (130) in a second operation mode.

2. The illumination device (100) of claim 1, wherein the control circuit (120) is further configured to control the plurality of light sources (110) to not entirely illuminate the field of illumination (130) in the second operation mode.

3. The illumination device (100) of any one of the previous claims, further comprising:
an optical device (300) comprising one or more focusing optical device (310b) and one or more diffusing optical device (310a);
wherein the one or more diffusing optical device (310a) is configured to diffuse light emitted by at least one of the plurality of light sources (110) in the first operation mode, and
wherein the one or more focusing optical device (310b) is configured to focus light emitted by at least one of the plurality of light sources (110) in the second operation mode.

4. The illumination device (100) of any one of the previous claims, wherein the control circuit (120) is further configured to selectively switch on and off a first subset (210a) of the plurality of light sources (110) in the first operation mode to illuminate the field of illumination (130) and to selectively switch on and off a second subset (210b) of the plurality of light sources (110) in the second operation mode to illuminate said at least one subfield (140-1, 140-2, 140-3).

5. The illumination device (100) of claim 4, wherein the control circuit (120) comprises:
a first driver circuit (220a) connected to the first subset (210a) of the plurality of light sources (110) and configured to switch on the first subset (210a) in the first operation mode; and
a second driver circuit (220b) connected to the second subset (210b) of the plurality of light sources (110) and configured to switch on the second subset (210b) in the second operation mode.

6. The illumination device (100) of claim 3 and claim 4 or 5, wherein at least one of the one or more focusing optical device (310b) faces at least one of the light sources of the second subset (210b), and wherein at least one of the one or more diffusing optical device (310a) faces at least one of the light sources of the first subset (210a).

7. The illumination device (100) of claim 6, wherein the at least one of the one or more focusing optical device (310b) protrudes from the optical device (300) towards the at least one of the light sources of the second subset (210b).

8. The illumination device (100) of claim 6, wherein the at least one of the one or more diffusing optical device (310a) protrudes from the optical device (300) towards the at least one of the light sources of the first subset (210a).

9. The illumination device (100) of any one of the previous claims, wherein the plurality of light sources (110) are arranged in an array (200).

10. The illumination device (100) of claim 3 and claim 9, wherein the light sources of the first subset (210a) and/or the light sources of the second subset (210b) are distributed irregularly over the array (200).

11. The illumination device (100) of claim 3 and claim 9 or 10, wherein a concentration of the light sources of the first subset (210a) in a center area of the array (200) is higher than in a boundary area of the array (200).

12. The illumination device (100) of any one of claims 4 to 7, wherein the light sources of the first subset (210a) are arranged in a first array and the light sources of the second subset (210b) are arranged in a second array, wherein the first array and the second array are spatially interleaved.

13. The illumination device (100) of any one of the previous claims, wherein the optical device (300) is placed in parallel with the plurality of light sources (110).

14. An optical sensor (400), comprising:
an illumination device (100) according to any one of claims 1 to 13; and
a photo-sensitive circuit (410) configured to generate measurement data based on reflected light from the field of illumination (130).

15. A method (500) for controlling an illumination device (100), comprising:
controlling (510) a plurality of light sources (110) of the illumination device (100) to entirely illuminate a field of illumination (130) in a first operation mode; and
controlling (520) the plurality of light sources (110) to illuminate at least one subfield (140-1, 140-2, 140-3) of the field of illumination (130) in a second operation mode.

## Amended claims

### Amended claims in accordance with Rule 137(2) EPC.

1. An illumination device (100) for an optical sensor (400), comprising:
a plurality of light sources (110);
a control circuit (120) configured to:
control the plurality of light sources (110) to entirely illuminate a field of illumination (130) in a first operation mode; and
control the plurality of light sources (110) to illuminate at least one subfield (140-1, 140-2, 140-3) of the field of illumination (130) in a second operation mode; and
an optical device (300) comprising one or more focusing optical device (310b) and one or more diffusing optical device (310a);
wherein the one or more diffusing optical device (310a) is configured to diffuse light emitted by at least one of the plurality of light sources (110) in the first operation mode, and
wherein the one or more focusing optical device (310b) is configured to focus light emitted by at least one of the plurality of light sources (110) in the second operation mode.

2. The illumination device (100) of claim 1, wherein the control circuit (120) is further configured to control the plurality of light sources (110) to not entirely illuminate the field of illumination (130) in the second operation mode.

3. The illumination device (100) of any one of the previous claims, wherein the control circuit (120) is further configured to selectively switch on and off a first subset (210a) of the plurality of light sources (110) in the first operation mode to illuminate the field of illumination (130) and to selectively switch on and off a second subset (210b) of the plurality of light sources (110) in the second operation mode to illuminate said at least one subfield (140-1, 140-2, 140-3).

4. The illumination device (100) of claim 3, wherein the control circuit (120) comprises:
a first driver circuit (220a) connected to the first subset (210a) of the plurality of light sources (110) and configured to switch on the first subset (210a) in the first operation mode; and
a second driver circuit (220b) connected to the second subset (210b) of the plurality of light sources (110) and configured to switch on the second subset (210b) in the second operation mode.

5. The illumination device (100) of claim 3 or 4, wherein at least one of the one or more focusing optical device (310b) faces at least one of the light sources of the second subset (210b), and wherein at least one of the one or more diffusing optical device (310a) faces at least one of the light sources of the first subset (210a).

6. The illumination device (100) of claim 5, wherein the at least one of the one or more focusing optical device (310b) protrudes from the optical device (300) towards the at least one of the light sources of the second subset (210b).

7. The illumination device (100) of claim 5, wherein the at least one of the one or more diffusing optical device (310a) protrudes from the optical device (300) towards the at least one of the light sources of the first subset (210a).

8. The illumination device (100) of any one of the previous claims, wherein the plurality of light sources (110) are arranged in an array (200).

9. The illumination device (100) of claim 3 and claim 8, wherein the light sources of the first subset (210a) and/or the light sources of the second subset (210b) are distributed irregularly over the array (200).

10. The illumination device (100) of claim 3 and claim 8 or 9, wherein a concentration of the light sources of the first subset (210a) in a center area of the array (200) is higher than in a boundary area of the array (200).

11. The illumination device (100) of any one of claims 3 to 6, wherein the light sources of the first subset (210a) are arranged in a first array and the light sources of the second subset (210b) are arranged in a second array, wherein the first array and the second array are spatially interleaved.

12. The illumination device (100) of any one of the previous claims, wherein the optical device (300) is placed in parallel with the plurality of light sources (110).

13. An optical sensor (400), comprising:
an illumination device (100) according to any one of claims 1 to 12; and
a photo-sensitive circuit (410) configured to generate measurement data based on reflected light from the field of illumination (130).

14. A method (500) for controlling an illumination device (100), comprising:
controlling (510) a plurality of light sources (110) of the illumination device (100) to entirely illuminate a field of illumination (130) in a first operation mode, wherein light emitted by at least one of the plurality of light sources (110) is diffused by one or more diffusing optical device (310a) of the illumination device (100) in the first operation mode; and
controlling (520) the plurality of light sources (110) to illuminate at least one subfield (140-1, 140-2, 140-3) of the field of illumination (130) in a second operation mode, wherein light emitted by at least one of the plurality of light sources (110) is focused by one or more focusing optical device (310b) of the illumination device (100) in the second operation mode.
